# EUROPÄISCHE PATENTANMELDUNG

(11) **EP 1 762 409 A2**
(43) Veröffentlichungstag der Anmeldung: **14.03.2007**
(21) Anmeldenummer: 06118993.2
(22) Anmeldetag: 16.08.2006
(51) Int. Cl.: B60J 7/10

(54) **Vorrichtung zum lösbaren Anschließen einer Öse an einen Gegenstand**

(30) Priorität: 08.09.2005 DE 202005014241 U
(71) Anmelder: TSL Kunststoffe GbR, vertretungsberechtigte Gesellschafter Renate Miederhoff, 09481 Scheibenberg (DE)
(72) Erfinder: Than, Johannes, 59846 Sundern (DE)
(74) Vertreter: Haverkamp, Jens

(57) **Zusammenfassung**

Eine Vorrichtung (2) zum lösbaren Anschließen einer Öse (17) an einen Gegenstand (1) umfasst einen bezüglich der anzuschließenden Öse (17) dem Gegenstand (1) zugeordneten Grundkörper (3) und eine Verriegelungseinrichtung, welche Verriegelungseinrichtung ein von dem Grundkörper (3) abragendes, einen Hinterschnitt (7) bildendes Hakenelement (6) und einen verstellbaren Riegel (9) aufweist. Dadurch ist eine den Grundkörper (3) einfassende Öse (17) durch das Hakenelement (6) und den in seiner verriegelnden Stellung befindlichen Riegel (9) unverlierbar an die Vorrichtung (2) angeschlossen. Der Riegel (9) ist gegenüber dem Grundkörper (3) um eine bezüglich des Riegels (9) exzentrisch verlaufende Achse (15) drehbar.

## Beschreibung

Die Erfindung betrifft eine Vorrichtung zum lösbaren Anschließen einer Öse an einen Gegenstand, umfassend einen bezüglich der anzuschließenden Öse dem Gegenstand zugeordneten Grundkörper und eine Verriegelungseinrichtung, welche Verriegelungseinrichtung ein von dem Grundkörper abragendes, einen Hinterschnitt bildendes Hakenelement und einen verstellbaren Riegel aufweist, so dass eine den Grundkörper einfassende Öse durch das Hakenelement und den in seiner verriegelnden Stellung befindlichen Riegel unverlierbar an die Vorrichtung angeschlossen ist.

Derartige Vorrichtungen werden beispielsweise als Planenverschlussvorrichtungen eingesetzt. Diese auch als Verschlüsse bezeichneten Vorrichtungen sind typischerweise im unteren Bereich eines Nutzfahrzeugaufbaus, beispielsweise an der Außenseite einer Bordwand befestigt. Die Verschlüsse dienen zum Anschließen einer das Nutzfahrzeug seitlich verschließenden Plane, die zu diesem Zweck entlang ihres unteren Randes in dem Abstand der Verschlüsse in die Seitenplane eingesetzte Ösen aufweist, etwa an eine Bordwand. Durch die Plane wird die Seite des Nutzfahrzeugaufbaus seitlich verschlossen.

Eine vorbekannte Vorrichtung zum lösbaren Anschließen einer solchen in eine Seitenplane eingesetzten Öse an die Bordwand eines Nutzfahrzeuges umfasst einen an der Bordwand befestigten länglichen Grundkörper, dessen Längserstreckung in vertikaler Richtung ausgerichtet ist. An dem Grundkörper ist ein Drehriegel drehbar angeschlossen. In seiner nicht verriegelnden Offen-Stellung entspricht die Länge des Drehriegels der Länge des Grundkörpers. Der Drehriegel ist um eine zentrisch verlaufende Drehachse gegenüber dem Grundkörper drehbar. In seiner Geschlossen-Stellung befindet sich der Drehriegel um 90° gegenüber seiner Offen-Stellung verschwenkt. In dieser Geschlossen-Stellung überragen die beiden Enden des Drehriegels den Grundkörper und bilden sodann Hinterschnitte aus. Diese Drehverschlüsse eignen sich ausschließlich zum Verriegeln von ovalen Ösen. Zwar sind diese Drehverschlüsse in aller Regel mit einfachen Mitteln und kostengünstig herstellbar, jedoch ist von Nachteil, dass es mitunter Schwierigkeiten bereiten kann, Ovalösen in eine Seitenplane positionsgenau in Bezug auf die Verschlüsse anzuordnen. Anderenfalls besteht die Gefahr, dass zum Schließen der Seitenplane die Ovalösen nicht oder zumindest nicht alle ohne weiteres auf den jeweiligen Grundkörper des einer Öse zugeordneten Verschlusses aufsetzbar sind. Des Weiteren haben diese Verschlüsse zum Nachteil, dass mit diesen ausschließlich Ovalösen verriegelt werden können. Rundösen können mit diesen vorbekannten Verschlüssen nicht verriegelt werden. Mithin legt man sich bei der Auswahl eines solchen Verschlusssystems zur Ausstattung eines Nutzfahrzeuges gleichfalls hinsichtlich der in eine Seitenplane einzusetzenden Ösen fest.

Neben den vorstehend beschriebenen Drehverschlüssen werden auch Schiebeverschlüsse zum Verriegeln bzw. Anschließen einer Öse eingesetzt. Diese umfassen einen Grundkörper, den die zu verriegelnde Öse einfasst. Der Rundkörper weist eine längliche Formgebung auf, die bei einem Nutzfahrzeugaufbau in vertikaler Richtung orientiert ist. Der Grundkörper trägt ein nach oben abragendes Hakenelement zum Ausbilden eines Hinterschnittes. Als Verriegelungseinrichtung zum Verriegeln der Öse dient neben diesem Hakenelement ein Schieberiegel, der gegen die Kraft einer Rückstellfeder in seine nicht verriegelnde Stellung gebracht wird. Im Gegensatz zu den zuvor beschriebenen Drehverschlüssen sind die Schiebeverschlüsse komplizierter in ihrem Aufbau und daher grundsätzlich auch anfälliger gegenüber Beschädigungen, etwa durch Verschleiß. Zwar eignen sich diese Schiebeverschlüsse gleichermaßen zum Anschließen von Oval- und Rundösen, jedoch werden diese Verschlüsse aufgrund der vorgenannten Nachteile nur selten verwendet.

Zum lösbaren Anschließen von Rundösen, etwa an die Bordwand eines Nutzfahrzeuges sind auch Klemmverschlüsse bekannt geworden. Diese umfassen einen runden Spreizkörper, in dem ein Klemmkörper drehbar gelagert ist, der in Abhängigkeit von seiner Stellung den diesen umgebenden Spreizkörper in der Geschlossen-Stellung dieser Verschlussvorrichtung aufweitet. Auch bei dieser Verschlussvorrichtung müssen die in die Seitenplane eingesetzten Ösen sehr genau positioniert sein, da ansonsten ein Aufsetzen der Rundösen auf den Spreizkörper nicht oder nur mit Schwierigkeiten möglich ist. Überdies wird ein zusätzliches Werkzeug zum Drehen des Spreizkörpers benötigt, so dass der Vorgang des Verriegelns und dementsprechend auch des Lösens der Ösen aufwendig ist.

Ausgehend von dem diskutierten Stand der Technik liegt der Erfindung daher die Aufgabe zugrunde, eine eingangs genannte Vorrichtung dergestalt weiterzubilden, dass diese nicht nur einfach in ihrer Konzeption ist, sondern dass mit dieser gleichermaßen Ovalösen und Rundösen verriegelt werden können.

Gelöst wird diese Aufgabe durch eine eingangs genannte, gattungsgemäße Vorrichtung, bei der der Riegel gegenüber dem Grundkörper um eine bezüglich des Riegels exzentrisch verlaufende Achse drehbar ist.

Diese Verschlussvorrichtung verfügt über einen Grundkörper und einen Drehriegel, so dass die Vorrichtung nur wenige Elemente und insbesondere einfach konzipierte Elemente aufweist. Der Riegel ist um eine bezüglich seiner Längserstreckung exzentrische Achse drehbar an den Grundkörper angeschlossen. In seiner nicht verriegelnden Offen-Stellung überragt der Riegel zweckmäßigerweise den Grundkörper nicht. In jedem Fall ist in der Offen-Stellung der Riegel gegenüber dem Grundkörper so angeordnet bzw. weist eine solche Ausdehnung auf, dass die an die Verschlussvorrichtung anzuschließende Öse ohne weiteres in ihre den Grundkörper einfassende Stellung gebracht werden kann. Aufgrund der exzentrisch bzw. außermittig angeordneten Drehachse überragt der Riegel dagegen in seiner verriegelnden Geschlossen-Stellung mit zumindest einem wirksamen Riegelabschnitt den Grundkörper und bildet damit neben dem Hakenabschnitt einen zweiten Hinterschnitt aus, so dass eine den Grundkörper einfassende Öse unverlierbar an die Vorrichtung angeschlossen werden kann. Der Riegel wird zu diesem Zweck vorzugsweise um 180° gegenüber seiner Offen-Stellung gedreht. Die bevorzugte Verwendung eines Riegels, der um 180° gedreht werden muss, um aus seiner Offen-Stellung in seine Geschlossen-Stellung und umgekehrt gebracht werden zu können, hat ferner zum Vorteil, dass der Riegel eine quer zur Längserstreckung desselben verlaufende Öffnung aufweisen kann und aus diesem Grunde der Riegel ohne weiteres geeignet ist, durch ein Zollverschlussseil in seiner Geschlossen-Stellung gesichert zu werden. Durch die Ausbildung eines Riegels, in Längserstreckung des Grundkörpers, eignet sich diese Verschlussvorrichtung zum Verriegeln sowohl von ovalen Ösen als auch von Rundösen. Bei einem Einsatz von Rundösen zum Anschließen an die Verschlussvorrichtung bietet die umfänglich gleich bleibende Weite der Öse ausreichend Spielraum, um Positionierungstoleranzen beim Einsetzen der Öse in eine Trägerbahn ausgleichen zu können.

Nachfolgend ist die Erfindung anhand eines Ausführungsbeispiels unter Bezugnahme auf die beigefügten Figuren beschrieben. Es zeigen:
- **Fig. 1:**: in einer schematisierten, zum Teil geschnittenen Seitenansicht eine an einer Bordwand eines Nutzfahrzeuges befindliche Vorrichtung zum lösbaren Anschließen einer Öse, dargestellt in ihrer nicht verriegelnden Offen-Stellung,
- **Fig. 2:**: die Vorrichtung der Figur 1 in einer Draufsicht (ohne Öse und Bordwand),
- **Fig. 3:**: die in Figur 1 gezeigte Anordnung mit der Vorrichtung in ihrer die Öse verriegelnden Geschlossen-Stellung,
- **Fig. 4:**: die Vorrichtung der Figur 3 in einer Draufsicht (ohne Öse und Bordwand),
- **Fig. 5:**: die Anordnung der Figur 1 darstellend das Lösen einer in eine Trägerbahn eingebrachten Öse von der Vorrichtung und
- **Fig. 6:**: die Anordnung der Figur 5 nach Lösen der Öse von der Vorrichtung.

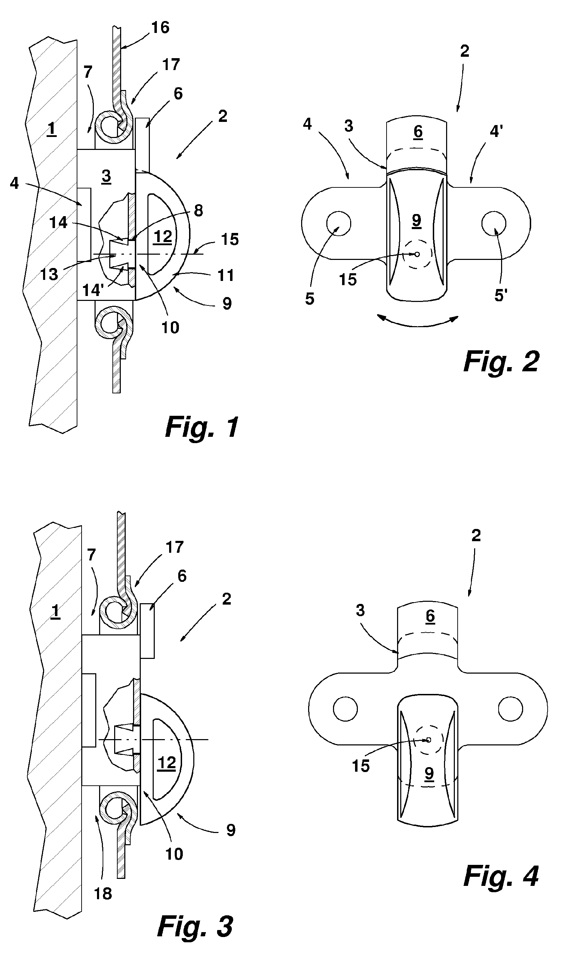

An einer Bordwand 1 eines im Übrigen nicht näher dargestellten Nutzfahrzeugaufbaus, bei dem es sich beispielsweise um einen Lastkraftwagen handeln kann, sind der Längserstreckung der Bordwand 1 folgend mehrere Vorrichtungen zum lösbaren Anschließen jeweils einer Öse - im Folgenden als Verschlussvorrichtung bezeichnet - angeordnet. In Figur 1 ist eine solche, an die Bordwand 1 angeschlossene Verschlussvorrichtung 2 wiedergegeben. Die Verschlussvorrichtung 2 umfasst einen Grundkörper 3, der - wie aus Figur 2 ersichtlich - eine längliche Erstreckung aufweist. Zum Befestigen des Grundkörpers 3 und somit der Verschlussvorrichtung 2 an der Bordwand 1 sind an diesem zwei Befestigungslaschen 4, 4' angeformt. Die Befestigungslaschen 4, 4' weisen jeweils eine Befestigungsöffnung 5, 5' auf, so dass die Verschlussvorrichtung 2 beispielsweise mittels Schrauben oder Nieten an der Bordwand 1 befestigt werden kann. Der Grundkörper 3 ist bei dem in den Figuren dargestellten Ausführungsbeispiel als Hohlkörper gefertigt, wie sich dieses aus dem in Figur 1 gezeigten Aufriss ergibt.

Die Längserstreckung des Grundkörpers 3 in vertikaler Richtung nach oben verlängernd ist an dem Grundkörper 3 ein Hakenelement 6 angeformt, das mit dem oberen Abschluss des Grundkörpers 3 einen Hinterschnitt 7 bildet.

In die Oberseite des Grundkörpers 3 ist eine bezüglich der Längserstreckung des Grundkörpers 3 außermittige Öffnung 8 eingebracht. Diese Öffnung 8 dient als Lager für einen der Verschlussvorrichtung 2 zugehörigen Drehriegel 9. Der Drehriegel 9 besteht bei dem dargestellten Ausführungsbeispiel aus einer unteren Riegelplatte 10 und einer daran angeformten, sich nach oben mit einer konvex gekrümmten Oberseite ausgebildeten Handhabe 11. Die bogenförmig ausgebildete Handhabe 11 schließt zusammen mit der Oberseite der Riegelplatte 10 eine Öffnung 12 ein. An der Unterseite der Riegelplatte 10 des Drehriegels 9 ist ein Lagerzapfen 13 angeformt. Der Lagerzapfen 13 durchgreift die Öffnung 8 des Grundkörpers 3. An dem Lagerzapfen 13 sind bei dem dargestellten Ausführungsbeispiel zum Anbinden des Drehriegels 9 an den Grundkörper 3 Rastnasen 14, 14' radial nach außen abragend angeformt. Die Rastnasen 14, 14' hintergreifen die Öffnung 8 des Grundkörpers 3, wodurch der Drehriegel 9 unverlierbar an dem Grundkörper 3 gehalten ist. Der Drehriegel 9 ist um die in Figur 1 strichpunktierte dargestellte Drehachse 15 gegenüber dem Grundkörper 3 verschwenkbar. Bei der Verschlussvorrichtung 2 bilden somit das Hakenelement 6 und der Drehriegel 9 gemeinsam die Verriegelungseinrichtung.

Bei dem dargestellten Ausführungsbeispiel handelt es sich bei dem Grundkörper 3 um ein Metallteil und bei dem Drehriegel 9 um ein Kunststoffspritzgussteil. Selbstverständlich ist es möglich, beide Teile aus Metall oder auch beide Teile aus Kunststoff herzustellen, wobei ein Fachmann diejenigen Materialien verwenden wird, die dem jeweiligen Anwendungszweck der Verschlussvorrichtung genügen.

Die Verschlussvorrichtung 2 dient zum Verschließen einer Seitenplane 16, mit der eine Seite des Nutzfahrzeugaufbaus unterseitig verschlossen werden soll. Die Seitenplane 16 ist in nicht dargestellter Art und Weise am oberen Abschluss des Nutzfahrzeugaufbaus gehalten. Die Seitenplane 16 verfügt über parallel zum unteren Rand der Seitenplane 16 mit Abstand zueinander angeordnet Rundösen, die an den den Verschlussvorrichtungen 2 entsprechenden Positionen in die Plane eingesetzt sind. In Figur 1 ist eine solche Rundöse 17 im Schnitt gezeigt. Die Rundöse 17 ist zum Verschließen dieser Seite des Nutzfahrzeugaufbaus mit seiner Oberseite in den Hinterschnitt 7 der Verschlussvorrichtung 2 eingehängt worden. Zum Verriegeln der Öse an der Verschlussvorrichtung 2 wird nunmehr der Drehriegel 9 um 180° verschwenkt. Diese die Öse 17 verriegelnde Stellung des Drehriegels 9 der Verschlussvorrichtung 2 ist in Figur 3 gezeigt. Aufgrund der exzentrisch bezüglich der Längserstreckung des Drehriegels 9 angeordneten Schwenkachse überragt seine Riegelplatte 10 in der Geschlossen-Stellung der Verschlussvorrichtung 2 den unteren Abschluss des Grundkörpers 3 und bildet sodann an dem dem Hakenelement 6 diametral gegenüberliegenden Ende des Grundkörpers einen zweiten Hinterschnitt 18 aus. Der Abstand des freien Endes des Hakenelementes 6 zu dem unteren Abschluss des Drehriegels 9 in seiner in Figur 3 gezeigten Stellung ist größer als der Innendurchmesser der Öse 17. Diese ist somit in der in Figur 3 gezeigten Stellung des Drehriegels 9 der Verschlussvorrichtung 2 mittels der Verschlussvorrichtung 2 an die Bordwand 1 angeschlossen. Die Geschlossen-Stellung der Verschlussvorrichtung 2 ist in Figur 4 nochmals in einer Draufsicht gezeigt. Die Ausdehnung des Grundkörpers 3 ist darin gestrichelt wiedergegeben, damit auch in der Draufsicht der überkragende Charakter des Hakenelementes 6 und des in seiner Geschlossen-Stellung befindlichen Drehriegels 9 bzw. seiner Riegelplatte 10 erkennbar ist. Der überkragende Abschnitt der Riegelplatte 10 zum Ausbilden des Hinterschnittes 18 bildet in dieser Stellung des Drehriegels 9 die wirksame Riegelfläche. Diese wirksame Riegelfläche der Riegelplatte 10 bildet bei dem dargestellten Ausführungsbeispiel zusammen mit der zu der Öse 17 bzw. der Bordwand 1 weisenden Unterseite des Hakenelementes 6 eine gemeinsame Ebene aus.

Die Durchdringungsachse der Öffnung 12 des Drehriegels 9 verläuft parallel zur Längserstreckung der Bordwand 1. Somit eignet sich die Öffnung 12 zum Durchführen eines Sicherungsseil, beispielsweise eines Zollverschlussseils, durch welches eine unbeabsichtigte Entriegelung verhindert ist.

Die in den Figuren 1 und 2 bzw. 3 und 4 gezeigten Stellungen des Drehhebels 9 sind durch eine Rastung haptisch gekennzeichnet. Durch die Rastung ist der Drehriegel 9 gleichsam in seiner Offen-Stellung und in seiner Geschlossen-Stellung fixiert.

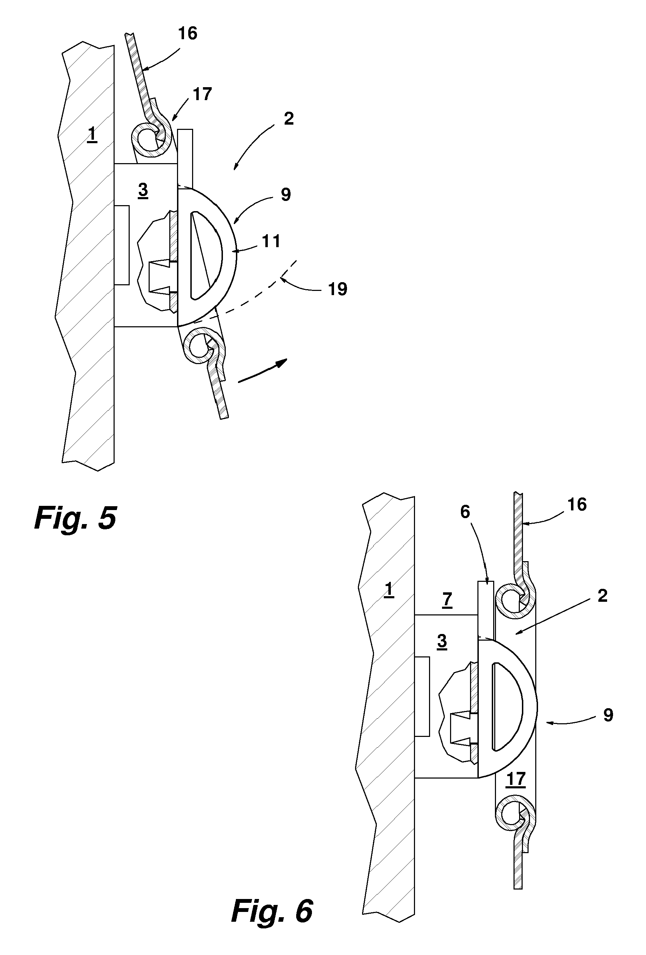

Zum Lösen der Öse 17 von der Verschlussvorrichtung 2 wird der Drehriegel 9 in seine in Figur 1 gezeigte Offen-Stellung zurückgedreht, der untere Rand der Seitenplane 16 ergriffen und nach außen hin verschwenkt, wie dieses schematisiert in Figur 5 dargestellt ist. Bei einem Fortsetzen des Schwenkvorganges über die in Figur 5 gezeigte Stellung hinaus wird der obere Teil der Öse 17 aus dem Hinterschnitt 7 herausgebracht. Anschließend befindet sich die Seitenplane 16 außerhalb des Hinterschnittes 7, wobei sich die Öse 17 mit ihrer Innenseite an der Außenseite des Hakenelementes oder auf der Außenseite des Drehriegels 9 abstützt. Ein unerwünschtes Einfallen der Öse 17 in eine Verriegelung ist damit unterbunden (vgl. Figur 6).

Zum Ermöglichen eines leichtgängigen Ein- und Ausschwenkens des unteren Randbereiches der Seitenplane 16 mit den Ösen 17 ist die Ausdehnung bzw. Größe des Drehriegels 9 mit seiner Handhabe 11 in seiner nicht verriegelnden Offen-Stellung dergestalt konzipiert, dass sich dieser innerhalb einer in Figur 5 gestrichelt dargestellten Bahn 19 befindet. Die Bahn 19 stellt die Bewegungsbahn des unteren Ösenabschnitts dar, wenn dieser an der Unterseite des Grundkörpers 3 anliegt und entsprechend der in Figur 5 gezeigten Pfeilrichtung nach außen aufgeschwenkt wird.

Bei dem in den Figuren dargestellten Ausführungsbeispiel ist die Verschlussvorrichtung 2 an eine Bordwand eines Nutzfahrzeuges angeschlossen und daher feststehend. Gleichermaßen kann die Verschlussvorrichtung auch an einem Roller eine Seitenplanenvorhangsystems angeordnet sein. Neben den beschriebenen Einsatzzwecken eignet sich die beschriebene Vorrichtung zum lösbaren Anschließen von Ösen auch zum Einsatz in anderen Bereichen, beispielsweise im Bootsbereich zum Anschließen von Planen, beispielsweise zur Abdeckung von Booten oder dergleichen.

### Bezugszeichenliste

- 1: Bordwand
- 2: Vorrichtung, Verschlussvorrichtung
- 3: Grundkörper
- 4, 4': Befestigungslasche
- 5, 5': Befestigungsöffnung
- 6: Hakenelement
- 7: Hinterschnitt
- 8: Öffnung
- 9: Drehriegel
- 10: Riegelplatte
- 11: Handhabe
- 12: Öffnung
- 13: Lagerzapfen
- 14, 14': Rastnase
- 15: Drehachse
- 16: Seitenplane
- 17: Rundöse
- 18: Hinterschnitt
- 19: Bahn, Bewegungsbahn

## Patentansprüche

1. Vorrichtung zum lösbaren Anschließen einer Öse (17) an einen Gegenstand (1), umfassend einen bezüglich der anzuschließenden Öse (17) dem Gegenstand (1) zugeordneten Grundkörper (3) und eine Verriegelungseinrichtung, welche Verriegelungseinrichtung ein von dem Grundkörper (3) abragendes, einen Hinterschnitt (7) bildendes Hakenelement (6) und einen verstellbaren Riegel (9) aufweist, so dass eine den Grundkörper (3) einfassende Öse (17) durch das Hakenelement (6) und den in seiner verriegelnden Stellung befindlichen Riegel (9) unverlierbar an die Vorrichtung (2) angeschlossen ist, **dadurch gekennzeichnet, dass** der Riegel (9) gegenüber dem Grundkörper (3) um eine bezüglich des Riegels (9) exzentrisch verlaufende Achse (15) drehbar ist.

2. Vorrichtung nach Anspruch 1, **dadurch gekennzeichnet, dass** der zum Verriegeln der Öse (17) wirksame Riegelabschnitt des Riegels (9) sich bezüglich des Grundkörpers (3) in seiner verriegelnden Stellung diametral dem Hakenelement (6) gegenüberliegend befindet.

3. Vorrichtung nach Anspruch 1 oder 2, **dadurch gekennzeichnet, dass** die zur Öse (17) weisende Fläche des Hakenelements (6) und die wirksame Riegelfläche des Riegelelementes (9) in seiner verriegelnden Stellung in einer Ebene angeordnet sind.

4. Vorrichtung nach einem der Ansprüche 1 bis 3, **dadurch gekennzeichnet, dass** der Abstand des freien Endes des Hakenelements (6) von dem diametral dem Hakenelement (6) gegenüberliegenden Ende des Grundkörpers (3) größer ist als der Durchmesser der an die Vorrichtung anzuschließenden Öse (17).

5. Vorrichtung nach einem der Ansprüche 1 bis 4, **dadurch gekennzeichnet, dass** der Riegel (9) eine Handhabe (11), insbesondere eine Handhabe (11) mit einer konvex gekrümmten Oberseite aufweist.

6. Vorrichtung nach Anspruch 5 in seinem Rückbezug auf Anspruch 4, **dadurch gekennzeichnet, dass** der Riegel (9) mit seiner Handhabe (11) in seiner nicht verriegelnden Stellung eine maximale Ausdehnung aufweist, die kleiner ist als die Länge des Grundkörpers (3), die dieser in seiner Ausrichtung in Längserstreckung des Hakenelementes (6) aufweist.

7. Vorrichtung nach Anspruch 5 oder 6, **dadurch gekennzeichnet, dass** der Riegel (9) eine quer zur Erstreckung des Riegels (9) in seiner verriegelnden Stellung verlaufende Öffnung (12) aufweist.

8. Vorrichtung nach einem der Ansprüche 1 bis 7, **dadurch gekennzeichnet, dass** der Riegel (9) ein Kunststoffteil, insbesondere ein Kunststoffspritzgussteil ist.

9. Vorrichtung nach einem der Ansprüche 1 bis 8, **dadurch gekennzeichnet, dass** die Vorrichtung eine Planenverschlussvorrichtung (2) ist, insbesondere eine solche zum Verschließen von Planen (16) an einem Nutzfahrzeug.
